# EUROPEAN PATENT APPLICATION

(11) **EP 4 318 336 A1**
(43) Date of publication of application: **07.02.2024**
(21) Application number: 22780290.7
(22) Date of filing: 22.03.2022
(51) Int. Cl.: G06N 20/00, G01C 15/00, G06F 11/34, G06Q 30/00

(54) **INFORMATION PROCESSING DEVICE AND INFORMATION PROCESSING METHOD**

(30) Priority: 31.03.2021 JP 2021059718
(71) Applicant: TOPCON CORPORATION, Tokyo 174-8580 (JP)
(72) Inventor: KIKUCHI Takeshi, Tokyo 174-8580 (JP)
(74) Representative: dompatent von Kreisler Selting Werner - Partnerschaft von Patent- und Rechtsanwälten mbB
(86) International application number: PCT/JP2022/013040
(87) International publication number: WO 2022/210075

(57) **Abstract**

Provided are an information processing device and an information processing method for maintenance management of surveying instruments, which predict occurrence of a complaint about a failure of a surveying instrument before the complaint occurs. An information processing device (100) generates learning data by using a set of complaint information including a complaint content and a complaint receipt time of a complaint received from a user and operational status data including an error log and an instrument log of a surveying instrument relating to the complaint in a predetermined period before occurrence of the complaint, from collected data (141) collected regarding a plurality of surveying instruments and including various data on each surveying instrument, performs machine learning by using the learning data, and when operational status data of a target surveying instrument is input, generates a learning model (144) for predicting a content and a time of a complaint that will occur in the future against the target surveying instrument.

## Description

### Technical Field

The present invention relates to an information processing device and an information processing method, and more specifically, to an information processing device and an information processing method for maintenance management of surveying instruments.

### Background Art

A surveying instrument such as a total station or a ground-mounted scanner is an advanced precision instrument constituted of mechanical components, optical components, and electric components. Therefore, in order to maintain the required measurement accuracy, it is necessary to perform maintenance periodically or as appropriate. For this, Patent Literature 1 discloses a surveying instrument that monitors an operating time of the surveying instrument, whether an error has occurred, etc., and gives a previous notice of a time for maintenance to a user.

### Citation List

### Patent Literature

Patent Literature 1: Japanese Published Unexamined Patent Application No. 2009-139386

### Summary of Invention

### Technical Problem

Meanwhile, when the maintenance is not appropriately made and a failure occurs in the surveying instrument, this causes a complaint from a user. In the surveying instrument disclosed in Patent Literature 1, as the time for maintenance, a period calculated from an operating time, etc., of the surveying instrument is set. However, a user's complaint action does not always coincide with the maintenance time calculated from an operating time, etc. This is because errors leading to complaints include an error that occurs only once and a user does not notice it, an error that immediately leads to a complaint action, and an error that does not immediately lead to a complaint action but leads to a complaint action through its repeated occurrence. Further, depending on the operating environment, etc., an error may occur before a calculated maintenance time arrives. Therefore, in order to truly prevent and reduce complaints from users, it has been required to predict errors that will cause complaints from users and respond to such errors in advance.

The present invention was made in view of these circumstances, and an object thereof is to provide a technique, for maintenance management of surveying instruments, to predict occurrences of complaints about failures of surveying instruments before the complaints occur.

### Solution to Problem

In order to achieve the object described above, an information processing device according to an aspect of the present invention includes a learning data generating unit configured to generate learning data by using a set of complaint information including a complaint content and a complaint receipt time of a complaint received from a user and operational status data of a surveying instrument relating to the complaint in a predetermined period before occurrence of the complaint, from collected data collected regarding a plurality of surveying instruments and including various data on each surveying instrument, where the operational status data includes an error log and an instrument log; and a learning model generating unit configured to perform machine learning by using the learning data, and when operational status data of a target surveying instrument is input, generate a learning model for predicting a content and a time of a complaint that will occur in the future against the target surveying instrument.

In the aspect described above, it is also preferable that for the complaint content, a text expressing the complaint content is classified and tagged according to the complaint content.

Further, in the aspect described above, it is also preferable that the learning data generating unit checks the complaint receipt time, identifies the most recent error occurrence time before receipt of the complaint from the operational status information, and determines the predetermined period before occurrence of the error as an extraction period of the operational status data.

Further, in the aspect described above, it is also preferable that the operational status data further includes measurement environment data.

Further, in the aspect described above, it is also preferable that the information processing device further includes a relearning unit configured to perform relearning by using the operational status data corresponding to a new complaint when new complaint information is input.

Further, an information processing device according to another aspect of the present invention includes a data acquiring unit configured to acquire operational status data of a target surveying instrument; a complaint occurrence predicting unit configured to, when operational status data of the target surveying instrument is input, predict a content and a time of a complaint that will occur in the future against the target surveying instrument by using a learning model obtained by performing machine learning by using learning data generated by using a set of complaint information including a complaint content and a complaint receipt time of a complaint received from a user and operational status data of a surveying instrument relating to the complaint in a predetermined period before occurrence of the complaint, from collected data collected regarding a plurality of surveying instruments and including various data on each surveying instrument, where the operational status data includes an error log and an instrument log; and a result providing unit configured to provide a prediction result of the complaint occurrence predicting unit to a user.

Further, an information processing method according to still another aspect of the present invention is an information processing method to be executed by a computer, and includes a step of generating learning data by using a set of complaint information including a complaint content and a complaint receipt time of a complaint received from a user and operational status data of a surveying instrument relating to the complaint in a predetermined period before occurrence of the complaint, from collected data collected regarding a plurality of surveying instruments and including various data on each surveying instrument, where the operational status data includes an error log and an instrument log; a step of generating learning data by using a set of a complaint content and operational status data before occurrence of the complaint with respect to the same surveying instrument; a step of performing machine learning by using the learning data, and when operational status data of a target surveying instrument is input, generating a learning model for predicting a content and a time of a complaint that will occur in the future against the target surveying instrument; a step of acquiring operational status data of the target surveying instrument; a step of inputting the operational status data of the target surveying instrument to the learning model, and predicting a content and a time of a complaint that will occur in the future against the target surveying instrument; and a step of providing a prediction result to a user.

Note that in this description, an "error" means a failure in which the surveying instrument does not properly function for surveying. This includes not only the state where the surveying instrument does not function, but also a state where a desired survey accuracy cannot be obtained although the surveying instrument can be used to take a survey.

In this description, a "complaint" is an "error (failure) report" made by a user to a manager such as a manufacturer, agent (dealer), or management company, etc.

### Advantageous Effects of Invention

By the information processing device and the information processing method according to the aspects described above, for maintenance management of surveying instruments, occurrence of a complaint about a failure of the surveying instrument can be predicted before the complaint occurs.

### Brief Description of Drawings

FIG. 1 is a view illustrating an overall configuration of the same system.
FIG. 2 is a view describing an outline of a flow of processing of a system using an information processing device according to an embodiment.
FIG. 3 is a diagram describing learning data and a learning model in the same system.
FIG. 4 is a block diagram illustrating a configuration example of the information processing device according to the embodiment.
FIG. 5 is a block diagram illustrating a configuration example of a terminal device in the system described above.
FIG. 6 is a block diagram illustrating a configuration example of a surveying instrument in the same system.
FIG. 7 is a flowchart of processing of the information processing device in a learning phase.
FIG. 8 is a flowchart of detailed processing of learning data generation in the learning phase.
FIGS. 9A and 9B are diagrams illustrating examples of complaint information.
FIG. 10 is a diagram illustrating an example of operational status data extracted from collected data.
FIG. 11 is a table describing types and relations of errors occurring in a surveying instrument.
FIG. 12 is a flowchart of processing of the information processing device in a prediction phase.
FIG. 13 is a diagram illustrating an example of an output screen of a complaint prediction result.
FIG. 14 is a diagram illustrating another example of an output screen of a complaint prediction result.
FIG. 15 is a block diagram illustrating a configuration example of an information processing device according to a modification.
FIG. 16 is a flowchart of processing of relearning of the information processing device according to the same modification.

### Description of Embodiments

Hereinafter, while preferred embodiments of an information processing device and an information processing method of the present disclosure will be described with reference to the drawings, the present invention is not limited to these. Further, in the following embodiments, the same configuration is provided with the same reference signs, and overlapping description will be omitted as appropriate.

### (Embodiments)

### 1. Outline of Information Processing System and Processing by Information Processing System

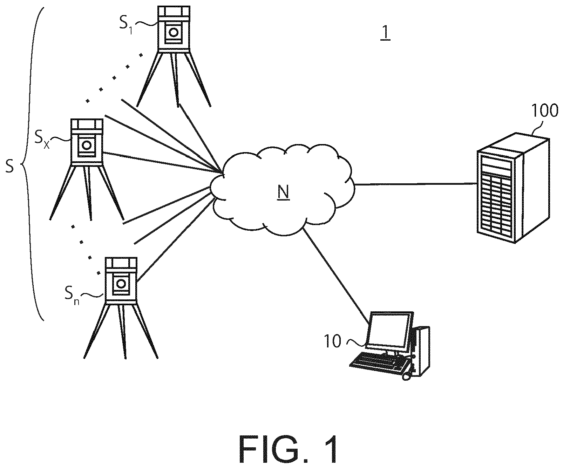

First, an outline of an information processing system (hereinafter, which is also simply referred to as a system) 1 according to the present embodiment will be described with reference to FIGS. 1 to 3.

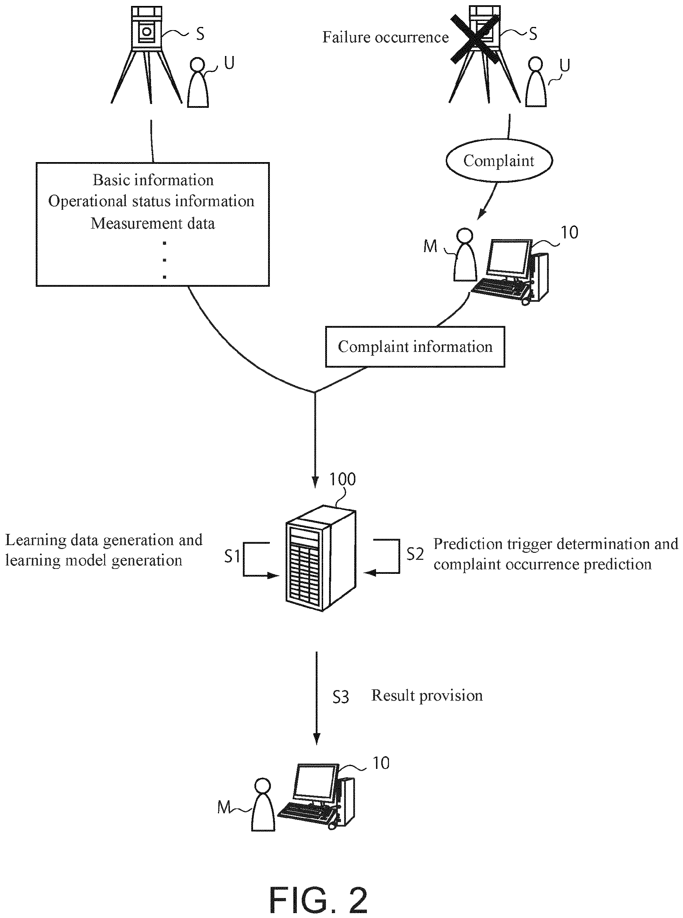

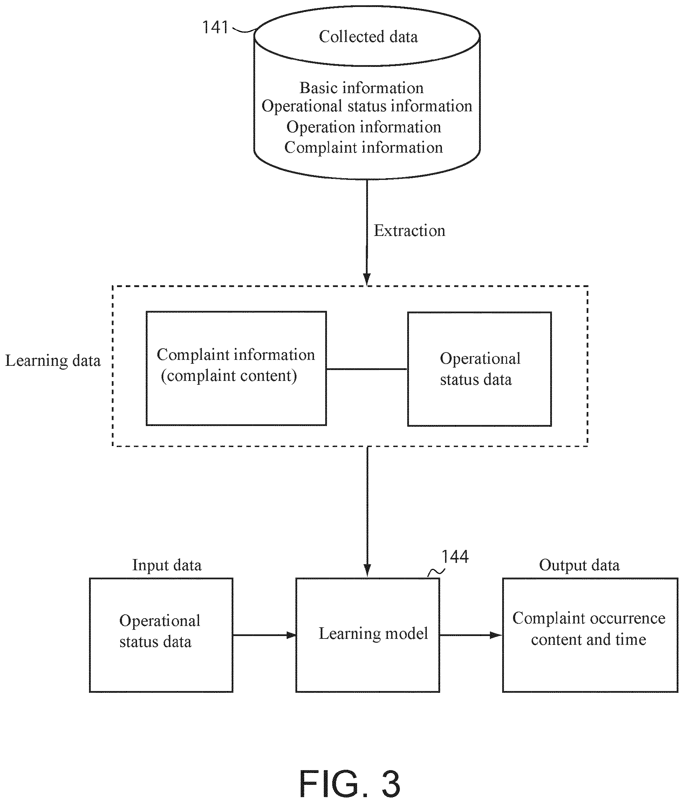

FIG. 1 is a view illustrating a schematic configuration of the system 1. FIG. 2 is a view describing an outline of a flow of processing in the system 1. FIG. 3 is a diagram describing learning data and a learning model.

As illustrated in FIG. 1, the system 1 includes at least one information processing device 100, at least one terminal device 10, and at least one surveying instrument S (S_{1~n}) (n is a natural number) . The information processing device 100, the terminal device 10, and the surveying instrument S are connected so as to communicate with each other wirelessly or by wire through a communication network N. The communication network N is, for example, a LAN (Local Area Network) or a WAN (Wide Area Network) such as the Internet.

The information processing device 100 is a management server owned by a manager M of the surveying instrument S such as a manufacturer, agent (dealer), or management company of the surveying instrument S. The terminal device 10 is a terminal device owned by the manager M.

The surveying instrument S is a surveying instrument owned or used by a user U. Data to be used for processing is data on the surveying instrument S. The information processing device 100 manages a plurality of surveying instruments S_{1~n} of a plurality of users, and in the following description, a surveying instrument not specified is designated as a surveying instrument S, while a surveying instrument as a target of a prediction of complaint occurrence is designated as a target surveying instrument Sₓ.

The manager M provides webpages for management of surveying instruments S. Information regarding the surveying instruments S can be browsed and managed on a webpage displayed on a display unit of the terminal device 10, from a manager screen associated with the manager M. A communication management system of such surveying instruments S may have a known configuration disclosed in, for example, Japanese Published Unexamined Patent Application No. 2019-7903, etc.

As illustrated at the upper left in FIG. 2, the surveying instrument S transmits various information including basic information, operational status information, survey data, etc., to the information processing device 100 at predetermined timings.

The "basic information" includes at least identification information of the surveying instrument S (hereinafter, referred to as an "ID of the surveying instrument S") . The basic information may include environment information data (temperature, humidity, etc.), position information, and software version information, etc. The ID of the surveying instrument S is information including model information, a manufacturing lot, and an individual number, etc., of the surveying instrument.

The "operational status information" is information including an "error log" and an "instrument log." The "error log" is history information such as, for example, error codes, occurrence years and dates, occurrence times, the numbers of times of occurrences, instrument states when the errors occurred, and horizontal angle measurement values, vertical angle measurement values, and distance measurement values when the errors occurred.

The "instrument log" is history information including information on operations of the surveying instrument S such as the cumulative number of distance measurements, the number of programs started, and types of started programs and information on instrument states at the time of the operations. This is, for example, a motor rotation speed during execution of a distance-measurement program, output values from the respective boards, etc.

The predetermined timings are timings such as, for example, always, every fixed period (hourly, daily, weekly, or monthly, etc.), or at each predetermined operation such as turning ON the power supply or measurement completion. The predetermined timings may be set, for example, to be every fixed period when there is no special event, or when any event occurs, for each event.

As illustrated at the upper right in FIG. 2, when a failure occurs during use of the surveying instrument S and a complaint from the user U occurs, an operator of the manager M receives the complaint. Specifically, a complaint is normally received by the operator of the manager M by phone, e-mail, facsimile, a message written on a webpage, etc.

As illustrated in FIG. 3, the "complaint information" includes a "complaint receipt time" and a "complaint content." The "complaint content" is a symptom of the failure of the surveying instrument S which the user U reported to the operator, and includes a user U's sensory evaluation. The "complaint information" is associated with the "ID of the surveying instrument S" that is a target of a complaint, input from the terminal device 10 to the information processing device 100 through a webpage, and stored as collected data 141 in an auxiliary storage device 140. The complaint receipt time is a time the complaint is received from the user U. The complaint receipt time may be identified by hour and minute, or may be identified by date. A time when an error that caused the complaint had occurred, which is grasped from operational status information, may be defined approximately as a complaint receipt time.

In this way, the information processing device 100 collects various data related to the surveying instrument S including the "operational status information" and the "complaint information" as big data, and manages the data by associating the data with the ID of the surveying instrument S. Instead of being stored in the information processing device 100, the collected data may be stored in a separate database server or cloud storage.

As sufficient data are accumulated, as Step S1, as illustrated in FIG. 3, the information processing device 100 generates learning data by using the accumulated complaint information and operational status information regarding multiple surveying instruments S, and generates a learning model 144.

Specifically, the information processing device 100 generates learning data by extracting "complaint information" and "operational status data" from the collected data in accordance with processing to be described later.

Herein, the "operational status data" is data in terms of a predetermined period before occurrence of an error that caused the complaint in the operational status information. This predetermined period may be a fixed period such as three months or a year. Alternatively, the predetermined period may be a period from a previous maintenance time to an error occurrence time. Further, alternatively, when it is before a maintenance period passes after the first operation, the predetermined period may be a period until the error occurrence time after the first operation.

By then performing machine learning by using the learning data acquired as described above, a learning model 144 is generated. This learning model 144 is a learned model for predicting occurrence of a complaint about a target surveying instrument Sₓ when operational status data of the target surveying instrument Sₓ is input.

Returning to FIG. 2, in Step S2, the information processing device 100 inputs operational status data of the target surveying instrument Sₓ in the predetermined period before a current time to the generated learning model 144, and outputs a complaint (content and time) that will occur in the future.

Then, the information processing device 100 provides a prediction result to the manager M in Step S3.

### 2. Detailed Configuration of Information Processing System 1

### 2.1 Information Processing Device 100

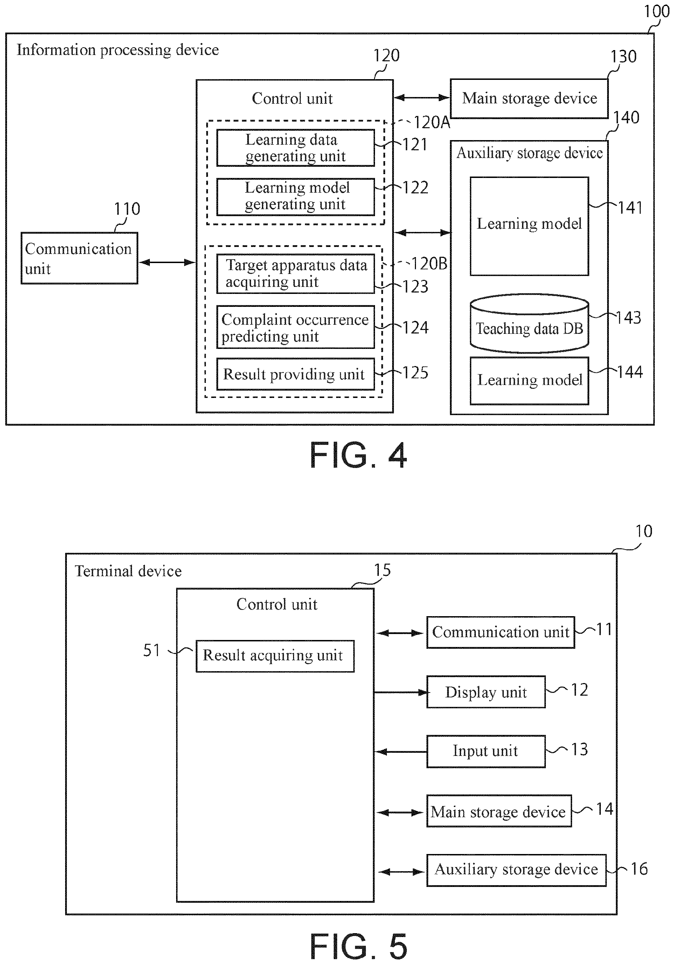

Hereinafter, a detailed configuration of the information processing system 1 will be described. FIG. 4 is a diagram illustrating a configuration example of the information processing device 100. The information processing device 100 is a so-called server computer. The information processing device 100 includes a communication unit 110, a control unit 120, a main storage device 130, and an auxiliary storage device 140.

The communication unit 110 is a communication control device such as a network adapter, a network interface card, or a LAN card, and connects the information processing device 100 to the communication network N by wire or wirelessly. The control unit 120 can transmit and receive various information to and from the surveying instruments S and the terminal device 10 through the communication unit 110 and the communication network N.

The control unit 120 is constituted of one or a plurality of CPUs (Central Processing Units, multicore CPUs or GPUs (graphics Processing Units), etc. The control unit 120 is connected to each unit of hardware constituting the information processing device 100 through a bus.

The control unit 120 includes, as functional units, a learning data generating unit 121, a learning model generating unit 122, an operational status data acquiring unit 123, a complaint occurrence predicting unit 124, and a result providing unit 125.

The learning data generating unit 121 extracts a set of "complaint information" and "operational status data" in a predetermined period before occurrence of an error that caused the complaint which corresponds to, that is, is associated with the same surveying instrument ID from the collected data 41, performs predetermined processing to generate learning data, and stores the learning data as a learning data DB 143 in the auxiliary storage device 140. The processing to generate the learning data will be described later.

The learning model generating unit 122 performs machine learning by using the "complaint information" and the "operational status data" as a learning data set. Specifically, the learning model generating unit 122 performs machine learning by qualitatively (in terms of probability distribution) evaluating changes in operational status data in the predetermined period before the occurrence of the error in the operational status data. Further, the learning model generating unit 122 performs machine learning for predicting an occurrence time and content of a complaint in consideration of a time difference between the error occurrence time and the complaint receipt time, and generates a learning model 144. The generated learning model 144 is stored in the auxiliary storage device 140. The generated learning model 144 is used as a learning model for predicting a content of a complaint that will occur, and a time when the complaint will occur in a case where operational status data of the target surveying instrument Sₓ in the predetermined period before the current time is input. That is, the learning model 144 outputs a prediction as to what the content of a complaint is and when and with what probability the complaint will occur. Generation of the learning model 144 is realized by a neural network that uses one or a plurality of layers of a nonlinear unit to predict an output corresponding to an input.

Specifically, machine learning is performed by an arbitrary technique, for example, logistic regression, SVM (Support Vector Machine), random forest, CNN (Convolutional Neural Network), RNN (Recurrent Neural Network), or XGBoost (extreme Gradient Boosting), etc. Machine learning may be supervised machine learning, semi-supervised machine learning, or unsupervised machine learning.

RNN is a technique that enables learning chronological data, and when chronological data is used as operational status data, the RNN technique is preferably used, and for example, MTRNN (Multi Timescale RNN), or LSTM (Long Short-Term Memory), etc., can be used.

The operational status data acquiring unit 123 acquires operational status data of the target surveying instrument Sₓ.

The complaint occurrence predicting unit 124 inputs the operational status data of the target surveying instrument Sₓ acquired by the operational status data acquiring unit 123 to the learning model 144 stored in the auxiliary storage device 140 to predicts a content of a complaint predicted to occur and a time of occurrence of the complaint with regard to the target surveying instrument Sₓ.

The result providing unit 125 provides a prediction result to the manager. The prediction result may be displayed as a webpage on the display unit 12 of the terminal device 10 of the manager M. Alternatively, the prediction result may be provided by being transmitted by e-mail to the terminal device 10 of the manager M.

The main storage device 130 is a storage device such as a SRAM (Static Random Access Memory), DRAM (Dynamic Random Access Memory), or flash memory. In the main storage device 130, information necessary for processing performed by the control unit 120 and a program being executed in the control unit 120 are temporarily stored.

The auxiliary storage device 140 is a storage device such as a SRAM, flash memory, or HDD (Hard Disc Drive). In the auxiliary storage device 140, the collected data 141, the learning data DB 143, and the learning model 144 are stored. Further, programs to execute functions of the respective functional units of the control unit 120, and various data necessary for execution of the programs, are stored. The collected data 141, the learning data DB 143, and the learning model 144 may be respectively stored in an external large-capacity storage device, or a data server not illustrated, etc., connected to the information processing device 100.

### 2.2 Terminal Device 10

The terminal device 10 is realized by a desktop PC, a notebook PC, a tablet terminal, a mobile phone, a PDA (Personal Digital Assistant), etc. The terminal device 10 includes a plurality of applications such as, for example, a web browser application, etc. An operator of the manager M can input information and commands to the information processing device 100 from the terminal device 10 through a webpage. On a webpage, a prediction result obtained by the information processing device 100 is displayed.

FIG. 5 illustrates a configuration example of the terminal device 10. The terminal device 10 includes a communication unit 11, a display unit 12, an input unit 13, a main storage device 14, a control unit 15, and an auxiliary storage device 16, and these units are connected by a bus.

The communication unit 11 is a communication control device such as a network adapter, a network interface card, or a LAN card. The terminal device 10 is connected to the communication network N by wire or wirelessly. The control unit 15 can transmit and receive various information to and from the information processing device 100 through the communication unit 11 and the communication network N.

The display unit 12 is an organic EL display or a liquid crystal display. Based on control by the control unit 15, the display unit 12 displays various information on webpages .

The input unit 13 is a keyboard including character keys, numeric keys, and an enter key, etc., a mouse, a power supply button, etc. An operator can input various information through the input unit 13. The display unit 12 and the input unit 13 may be integrally configured as a touch panel display.

The main storage device 14 is a storage device such as a SRAM, DRAM, or flash memory. In the main storage device 14, information necessary for processing that the control unit 15 performs and a program being executed in the control unit 15 are temporarily stored. The auxiliary storage device 16 is a storage device such as a SRAM, flash memory, or HDD. In the auxiliary storage device, a control program to be executed by the control unit 15 and various data necessary for execution of the control program, etc., are stored in advance.

The control unit 15 includes a microcomputer including, for example, a CPU, a ROM, a RAM, and an input/output port, etc., and various circuits. The CPU reads out and executes various programs stored in the auxiliary storage device 16 and the RAM. The control unit 15 includes a result acquiring unit 51.

### 2.3 Surveying instrument S

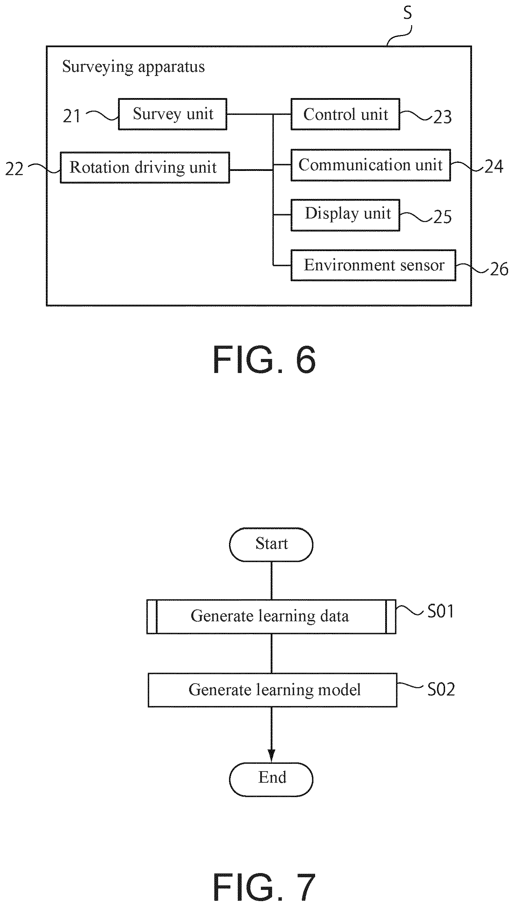

In this embodiment, the surveying instrument S is a total station. As illustrated in FIG. 6, the surveying instrument S includes a survey unit 21, a rotation driving unit 22, a control unit 23, a communication unit 24, a display unit 25, and an environment sensor 26.

The survey unit 21 includes a distance-measuring unit that measures a distance to a target by transmitting distance-measuring light and receiving reflected light, and an angle-measuring unit that measures a collimation angle of the distance-measuring light.

The rotation driving unit 22 consists of motors including a motor that vertically rotates a collimation telescope and a motor that horizontally rotates the housing.

The control unit 23 is a control unit including at least a CPU and a memory (ROM, RAM, etc.). The control unit 23 realizes functions of the surveying instrument S by executing a survey application program. The control unit 23 associates operational status information with an ID of the surveying instrument S and transmits the operational status information to the information processing device 100 at predetermined intervals.

The communication unit 24 is a communication control device similar to the communication unit 110 of the information processing device 100.

The display unit 25 has a liquid crystal screen, which allows for inputting survey conditions, etc., and on which various information on a survey is displayed.

The environment sensor 26 is a sensor for acquiring measurement environment data, such as a temperature sensor and a humidity sensor.

The surveying instrument S is not limited to a total station, and may be a surveying instrument such as a 3D laser scanner or theodolite as long as it includes a control unit that associates operational status information with the ID of the surveying instrument S and transmits the operational status information to the information processing device 100, and a sensor, etc., for acquiring data included in the operational status information, such as measurement environment data.

### 3. Information Processing

Next, details of information processing by this system will be described. Such information processing includes a learning phase in which a learning model 144 is generated by machine learning, and a prediction phase in which occurrence of a complaint is predicted based on the learning model 144. Hereinafter, processing of the information processing device 100 in each phase will be described.

### 3.1 Learning Phase

FIG. 7 is a flowchart of processing of the information processing device 100 in the learning phase.

As the processing starts, in Step S01, the learning data generating unit 121 generates, as learning data, a set of "complaint information" and "operational status data" related to the same surveying instrument from the collected data 141, and stores the set in the learning data DB 143. Details of this step S01 will be described later.

Next, in Step S02, the learning model generating unit 122 performs machine learning by using, as learning data, the set of the "complaint information" and the "operational status data" stored in the learning data DB 143, and generates a learning model 144 for predicting occurrence of a complaint about the target surveying instrument Sₓ when current operational status data of the target surveying instrument Sₓ is input. Then, the learning model generating unit 122 stores the generated learning model 144 in the auxiliary storage device 140, and ends the processing.

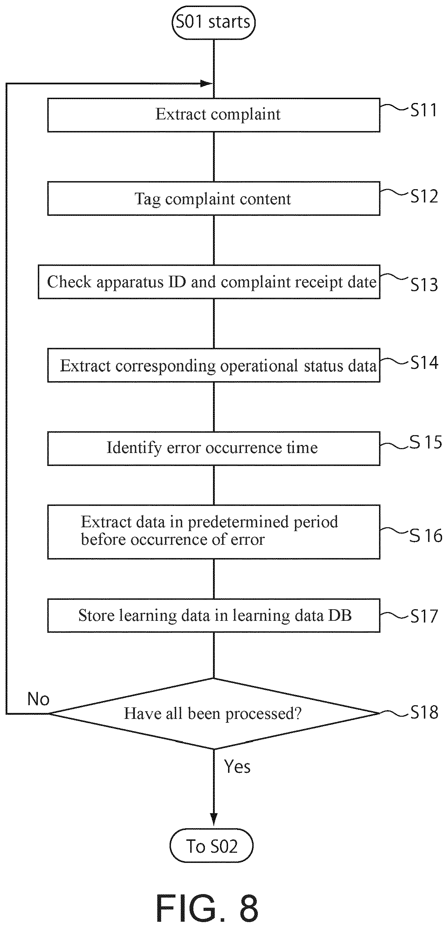

Here, details of Step S01 will be described with reference to FIG. 8. FIG. 8 is a flowchart of the details of Step S01, that is, processing related to pre-processing of learning data.

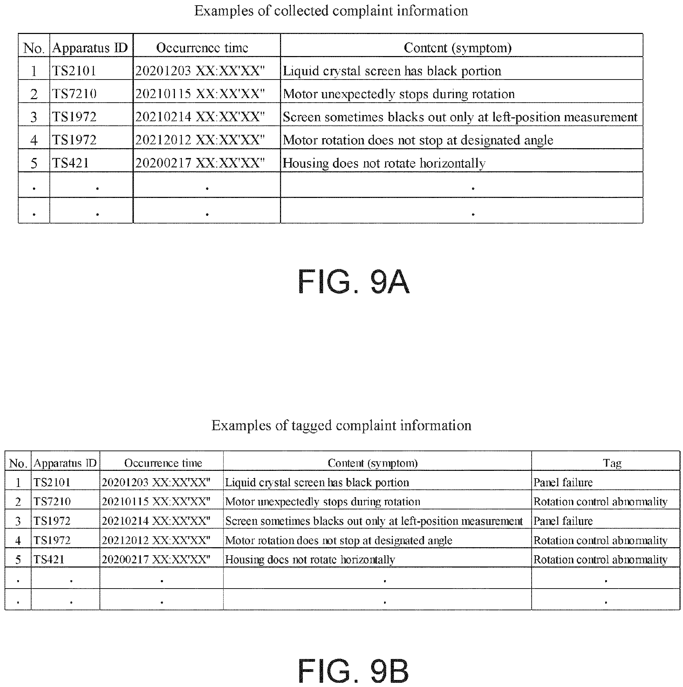

As Step S01 starts, in Step S11, the learning data generating unit 121 selects one complaint from the collected data 141. FIG. 9A illustrates examples of complaint information accumulated as the collected data 141. In the complaint information, in addition to a "complaint content," an ID of the surveying instrument S as a target of a complaint, and a "complaint receipt time" are included.

Next, in Step S12, the learning data generating unit 121 tags each type of symptom reported by the user U based on a text described in the complaint content, and quantifies the tag as a feature amount. As a tagging rule, for example, text contents and tags may be defined in tabular form. For example, a tagging rule is set in such a manner that, a tag "Contact failure/panel failure" is attached to "Screen sometimes blacks out only at left-position measurement," a tag "Rotation control abnormality" is attached to "Motor unexpectedly stops during rotation," and a tag "Rotation control abnormality" is attached to "Motor rotation does not stop at designated angle." Note that this tagging rule is absolutely based on a report made according to the sensation of the user U, and the tag does not always match the classification by error code.

FIG. 9B illustrates examples of tagged complaint information. Such tagging may be performed by an operator when receiving a complaint, but can be accomplished by a publicly known text annotation tool. Alternatively, the tagging may be accomplished by a publicly known text mining technique. Alternatively, the tagging may be accomplished by using a learning model generated by supervised machine learning using respective combinations of complaint contents and tags as learning data.

Next, in Step S13, the learning data generating unit 121 checks the ID of the surveying instrument S and the complaint receipt time with which the complaint information extracted in Step S11 is associated.

Next, in Step S14, the learning data generating unit 121 acquires operational status information related to the ID of the surveying instrument S acquired in Step S13 from the collected data 141.

Next, in Step S15, the learning data generating unit 121 identifies, from the operational status information of the surveying instrument S, the most recent error occurrence time retroactive to the complaint receipt time of Step S14 as being a cause of a phenomenon that caused the complaint.

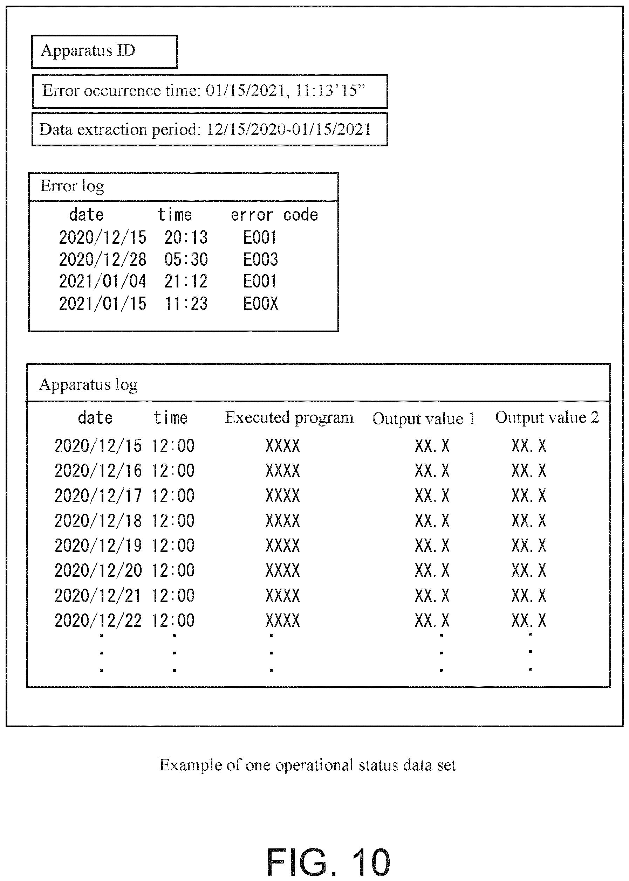

Next, in Step S16, data in a predetermined period retroactive to the error occurrence time is extracted as operational status data. FIG. 10 illustrates an example of an image of one operational status data set extracted in terms of the surveying instrument S with the instrument ID: TS7210 in No. 2 in FIGS. 9A and 9B. In the operational status data, in addition to an operational status data extraction target period (12/15/2020 to 01/15/2021) determined from the error occurrence time (01/15/2021, 11:23) closest to the complaint receipt date (01/17/2021), an error log in the extraction target period is included as chronological data. The operational status data does not necessarily have to be chronological data, and may be converted into such data that fluctuation in the predetermined period can be evaluated in the form of, for example, a cumulative value, an average value, a standard deviation, etc.

Next, in Step S17, the learning data generating unit 121 stores the complaint content tagged in Step S12 and the operational status data extracted in Step S15 as one set of learning data in the learning data DB 143 of the auxiliary storage device 140.

Next, in Step S18, the learning data generating unit 121 determines whether necessary processing has been completed for all complaints accumulated in the collected data 141.

When the processing is completed for all complaints (Yes), Step S01 is ended, and the processing shifts to Step S02. When the processing is not completed (No), the processing returns to Step S11, and Steps S11 to S18 are repeated for a next complaint until the processing is completed for all complaints.

As described above, when texts of the complaint contents are tagged, even in a case where the received complaints are variously expressed, complaint contents can be easily classified, so that the learning accuracy becomes high. In particular, by performing automatic tagging by the learning data generating unit 141, variation among operators and human errors can be eliminated to perform uniform classification.

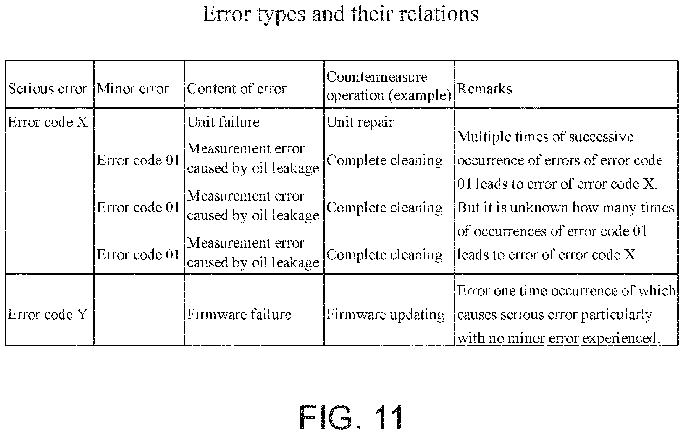

Meanwhile, errors include, like an error code Y illustrated in FIG. 11, a serious error that disables the surveying instrument S from functioning properly when the error once occurs, and leads to a complaint, and like an error code 01, a minor error that causes a serious error like an error code X when the error occurs repeatedly although each one time occurrence is not a serious error leading to a complaint. For example, as in the case of the example illustrated in FIG. 11, repeated occurrence of a minor error that is a "measurement error caused by oil leakage" causes a serious error of "unit failure." With respect to the minor error, a warning or the like is not issued based on an error code, so that a user cannot sense it, or even when a warning is issued, it is possible to continuously use the surveying instrument by canceling the warning state.

According to the information processing device of the present embodiment, an error occurrence time of an error that caused a complaint is identified, and operational status data (instrument log and error log) in a predetermined period before the occurrence are used as learning data. Therefore, when a minor error before occurrence of a serious error occurs in the target surveying instrument Sₓ, occurrence of the serious error can be predicted from a pattern of occurrence of the minor error of the target surveying instrument Sₓ. As a result, a method for resolving the minor error can be quickly and accurately provided to a user. Moreover, a serious error can be prevented from occurring.

Further, even in the case of a serious error which leads to a complaint when it once occurs, an instrument log and an error log are used as learning data, so that the information processing device 100 can predict a complaint occurrence time by considering an instrument operational status before the error occurred which cannot be known only with an error code.

In the former case, information as to how many times the surveying instrument had been operated when a minor error occurred since a previous maintenance time is also an important factor for prediction of the complaint occurrence time, so that the predetermined period in which operational information data is extracted is preferably set to a period from the previous maintenance time or the first operation start time to the error occurrence time.

Further, in the present embodiment, as learning data, the "complaint content" that is a symptom of the failure that the user reported to the operator is used, so that a content of a complaint that will occur (that is, an error that will occur) can be accurately predicted. This is because symptoms and resolution methods described in an operation manual, etc., are indeed theoretical, but they may not always match symptoms that occur at the time of real measurements. By including a complaint content corresponding to a symptom that the user intuitively grasped in the learning data, a complaint content corresponding to the actual operational status can be predicted.

### 3.2 Prediction Phase

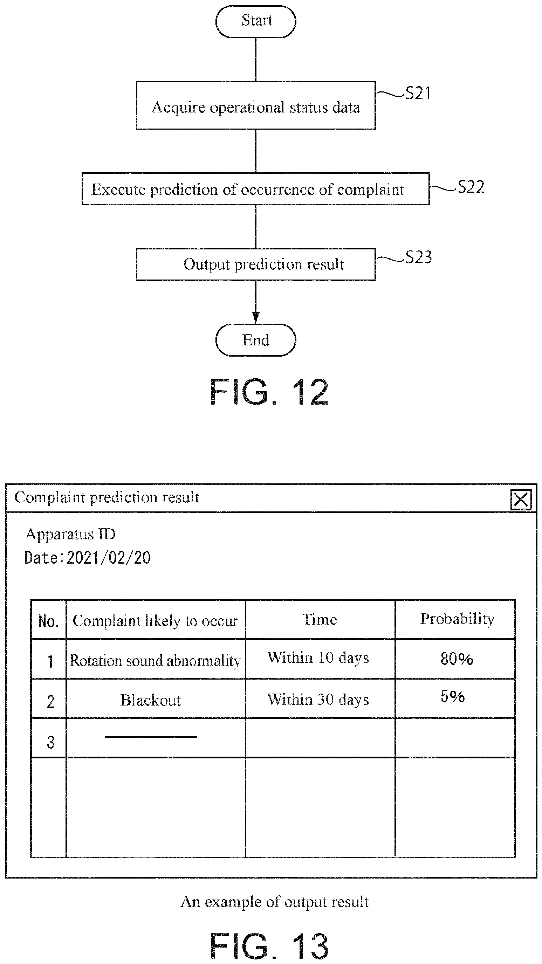

FIG. 12 is a flowchart of processing of the information processing device 100 in the prediction phase. In the prediction phase, a target surveying instrument Sₓ is set in advance. Setting as the target surveying instrument Sₓ may be made so that all surveying instruments S under management of the manager M are set successively, or some of the surveying instruments S are set at predetermined intervals. Alternatively, a target surveying instrument Sₓ may be individually designated and set from the terminal device 10 through a webpage.

As the processing starts, in Step S21, the operational status data acquiring unit 123 acquires operational status data within the predetermined period before a current time in terms of the surveying instrument S as a target of a prediction from the collected data 141. For example, when the ID of the target surveying instrument Sₓ is TS1234 and the current date is February 20, 2021, assuming that the predetermined period is one month, the operational status data acquiring unit 123 acquires, from the operational status information DB 142, operational status data of the surveying instrument S with the ID of TS1234 in the period from January 20, 2021 to February 20, 2021.

Next, in Step S22, the complaint occurrence predicting unit 124 inputs the operational status data acquired in Step S21 to the learning model 144, and predicts a complaint that can occur in the near future about the target surveying instrument S (for example, ID: TS1234).

Next, in Step S23, an output result is provided by the result providing unit 125, and the processing ends.

As described above, output results are, for example, a probability of a complaint content and a time when the complaint is predicted to occur according to the operational status data of the target surveying instrument S. FIG. 13 illustrates an example of an output result and a complaint prediction result output screen displayed on the display unit 12. What the content of a complaint is and when and with what probability the complaint will occur are displayed on the complaint prediction result output screen. This display enables the manager M to perform maintenance for a user before the user U takes a complaint action.

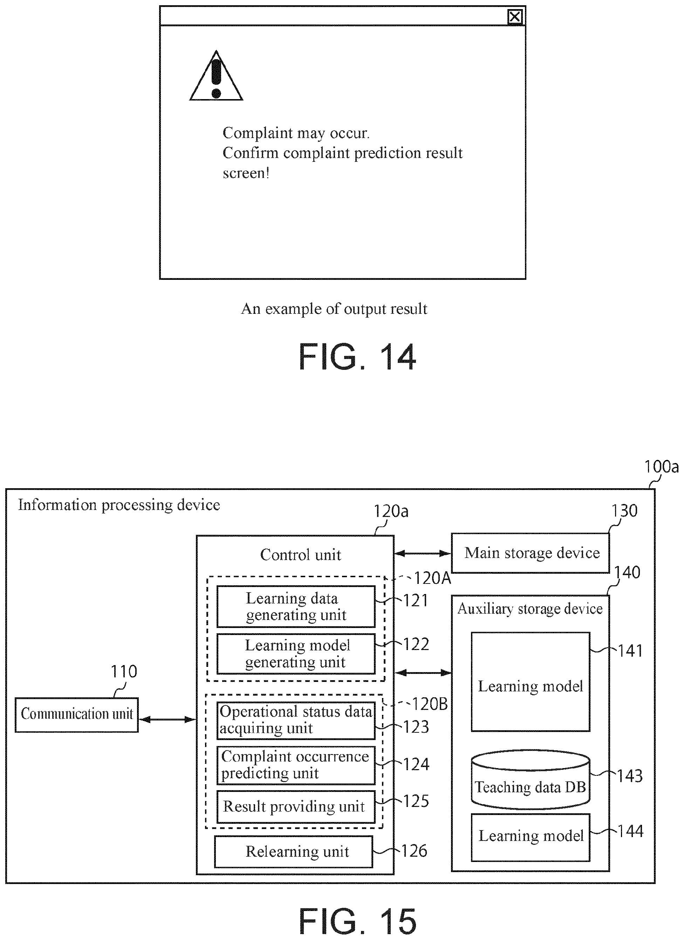

Meanwhile, as the manager M manages multiple surveying instruments, it is difficult to always monitor the complaint prediction result output screen for each instrument. In such a case, as illustrated in FIG. 14, the display unit 12 of the terminal device 10 may be configured to display a reminder notifying that there is a surveying instrument predicted to cause a complaint in the near future as a push notification.

The display of these output results output to the terminal device 10 is controlled by the result acquiring unit 51 of the terminal device 10. As described above, the output results may be provided by e-mail or other means.

As described above, the information processing device 100 according to the embodiment described above is configured such that by using the learning model 144 generated by machine learning by making a database of complaint information and operational status of the surveying instrument S, future occurrence of a complaint from a user is predicted from a current operational status of the surveying instrument S, so that the manager who looked at the output can prevent a complaint to be received from the user, and enables an agent, etc., to make a proper response to the user. On the other hand, the user can receive an appropriate response from the manager before the surveying instrument S fails to such an extent that the user has to make a complaint, so that the customer satisfaction is improved.

In the present embodiment, since an operational status of the surveying instrument S when an actual complaint action was made is considered, it is not necessary to give additional time, etc., and an agent, etc., can make an accurate response to a user.

In the present embodiment, the learning phase and the prediction phase are realized in the same information processing device 100. However, the learning phase and the prediction phase may be realized in different information processing devices 100. In this case, each of the information processing devices that respectively execute the learning phase and the prediction phase includes a learning unit 120A or a predicting unit 120B in the control unit 120.

In the present embodiment, a prediction result is notified to the manager M, however, without limitation to this, a prediction result may be provided to the user.

### 4. Modifications

FIG. 15 is a configuration block diagram of an information processing device 100a according to a modification. The information processing device 100a has generally the same configuration as that of the information processing device 100, but is different in that the information processing device 100a further includes a relearning unit 126 in a control unit 120a.

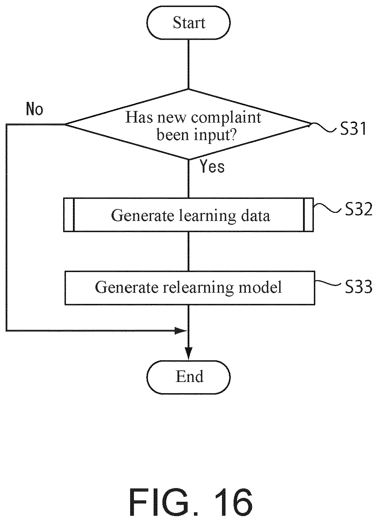

The relearning unit 126 of the information processing device 100a performs relearning of the learning model 144 by executing processing of the flowchart illustrated in FIG. 16.

That is, in Step S31, whether new complaint information is added to the collected data 141 is judged. When new complaint information is added (Yes), in Step S32, learning data is generated, and in Step S33, relearning of the learning model 144 is performed. According to this, each time new data is input, relearning is performed, and the prediction accuracy can be improved.

As another modification, learning data may be configured to include, in addition to "complaint information" and "operational status information," "measurement environment data" including a temperature, humidity, etc. This is because occurrence of a failure is related to an environment during use in many cases, and by considering the environment, a more accurate resolution method can be predicted. Therefore, by including measurement environment information in learning data, a more accurate error resolution method can be predicted.

As still another modification, a configuration may be made in which the surveying instrument includes a GNSS device that acquires position information, and learning data includes, in addition to "complaint information" and "operational status information," "position information." As a result, prediction results that are obtained by using the learning model become results by region or country. This is because, depending on regional characteristics and nationality, there are cases where many users make a complaint to the manager immediately after an error occurs, and there are cases where many users are slow to make a complaint to the manager after an error occurs. By thus including position information in learning data, a complaint occurrence time can be predicted according to the user's regionality and nationality.

Preferred embodiments of the present invention have been described above, and the above-described embodiments are just examples, and can be combined based on knowledge of a person skilled in the art, and such a combined embodiment is also included in the scope of the present invention.

### Reference Signs List

- 100:: Information processing device
- 100a:: Information processing device
- 120A:: Learning unit
- 120B:: Predicting unit
- 121:: Learning data generating unit
- 122:: Learning model generating unit
- 123:: Operational status data acquiring unit
- 124:: Complaint occurrence predicting unit
- 125:: Result providing unit
- 126:: Relearning unit
- 141:: Collected data
- 143:: Learning data DB
- 144:: Learning model

## Claims

1. An information processing device comprising:
a learning data generating unit configured to generate learning data by using a set of complaint information including a complaint content and a complaint receipt time of a complaint received from a user and operational status data of a surveying instrument relating to the complaint in a predetermined period before occurrence of the complaint, from collected data collected regarding a plurality of surveying instruments and including various data on each surveying instrument, where the operational status data includes an error log and an instrument log; and
a learning model generating unit configured to perform machine learning by using the learning data, and when operational status data of a target surveying instrument is input, generate a learning model for predicting a content and a time of a complaint that will occur in the future against the target surveying instrument.

2. The information processing device according to Claim 1, wherein for the complaint content, a text expressing the complaint content is classified and tagged according to the complaint content.

3. The information processing device according to Claim 1 or 2, wherein the learning data generating unit checks the complaint receipt time, identifies the most recent error occurrence time before receipt of the complaint from the operational status information, and determines the predetermined period before occurrence of the error as an extraction period of the operational status data.

4. The information processing device according to any of Claims 1 to 3, wherein the operational status data further includes measurement environment data.

5. The information processing device according to any of Claims 1 to 4, further comprising a relearning unit configured to perform relearning by using the operational status data corresponding to a new complaint when new complaint information is input.

6. An information processing device comprising:
a data acquiring unit configured to acquire operational status data of a target surveying instrument;
a complaint occurrence predicting unit configured to, when operational status data of the target surveying instrument is input, predict a content and a time of a complaint that will occur in the future against the target surveying instrument by using a learning model obtained by performing machine learning by using learning data generated by using a set of complaint information including a complaint content and a complaint receipt time of a complaint received from a user and operational status data of a surveying instrument relating to the complaint in a predetermined period before occurrence of the complaint, from collected data collected regarding a plurality of surveying instruments and including various data on each surveying instrument, where the operational status data includes an error log and an instrument log; and
a result providing unit configured to provide a prediction result of the complaint occurrence predicting unit.

7. An information processing method to be executed by a computer, comprising:
a step of generating learning data by using a set of complaint information including a complaint content and a complaint receipt time of a complaint received from a user and operational status data of a surveying instrument relating to the complaint in a predetermined period before occurrence of the complaint, from collected data collected regarding a plurality of surveying instruments and including various data on each surveying instrument, where the operational status data includes an error log and an instrument log;
a step of performing machine learning by using the learning data, and when operational status data of a target surveying instrument is input, generating a learning model for predicting a content and a time of a complaint that will occur in the future against the target surveying instrument;
a step of acquiring operational status data of the target surveying instrument;
a step of inputting the operational status data of the target surveying instrument to the learning model, and predicting a content and a time of a complaint that will occur in the future against the target surveying instrument; and
a step of providing a prediction result.
